# EUROPÄISCHE PATENTSCHRIFT

(11) **EP 2 882 972 B1**
(45) Veröffentlichungstag und Bekanntmachung des Hinweises auf die Patenterteilung: **15.06.2016**
(21) Anmeldenummer: 13745680.2
(22) Anmeldetag: 07.08.2013
(51) Int. Cl.: F16D 1/033, F16D 1/076

(54) **MASCHINENANORDNUNG UND VERFAHREN ZU IHRER HERSTELLUNG**
MACHINE ARRANGEMENT AND METHOD FOR THE PRODUCTION THEREOF
ENSEMBLE MACHINE ET SON PROCÉDÉ DE FABRICATION

(30) Priorität: 10.08.2012 DE 102012214271
(43) Veröffentlichungstag der Anmeldung: 17.06.2015
(73) Patentinhaber: Aktiebolaget SKF, 415 50 Göteborg (SE)
(72) Erfinder: AFSHAR, Alireza, S-41262 Gothenburg (SE); GLAENTZ, Wolfgang, 97422 Schweinfurt (DE)
(74) Vertreter: Kuhstrebe, Jochen
(86) Internationale Anmeldenummer: PCT/EP2013/066569
(87) Internationale Veröffentlichungsnummer: WO 2014/023774

(56) Entgegenhaltungen:
- EP-A1- 2 273 142
- WO-A1-2010/010237
- DE-A1- 19 710 932
- DE-A1-102007 057 906

## Beschreibung

Die Erfindung betrifft ein Verfahren zur Herstellung einer Maschinenanordnung, umfassend ein erstes Maschinenteil und ein zweites Maschinenteil, wobei Kupplungsmittel vorhanden sind, um die beiden Maschinenteile fest miteinander so zu verbinden, dass ein Drehmoment und/oder eine Kraft vom ersten auf das zweite Maschinenteil übertragen werden kann, wobei die Kupplungsmittel zumindest einen fest mit dem ersten Maschinenteil verbundenen oder mit diesem in Kontakt stehenden ersten Übertragungsabschnitt mit einer ersten Kontaktfläche und mindestens einen fest mit dem zweiten Maschinenteil verbundenen oder mit diesem in Kontakt stehenden zweiten Übertragungsabschnitt mit einer zweiten Kontaktfläche aufweisen, wobei die beiden Kontaktflächen aufeinander gepresst werden und wobei auf zumindest einer der Kontaktflächen eine zumindest abschnittsweise regelmäßig eingebrachte Mikroprofilierung vorhanden ist, dergestalt, dass in regelmäßigen Abständen Materialspitzen vorhanden sind, die benachbarte Talbereiche um mindestens 30 µm übertragen.

Für die Übertragung hoher Drehmomente, beispielsweise zwischen Rotorwellen und/oder Hohlwellen mit möglichst kleinen Durchmessern, ist es erforderlich, die Übertragungsabschnitte des Kupplungselements mit einem möglichst hohen Reibungskoeffizienten zu versehen. Hierbei können beispielsweise dünnwandige Zwischenhülsen in Verbindung mit Schrumpfscheiben zur Übertragung von Drehmomenten eingesetzt werden oder Zwischenplatten zur Absicherung und Übertragung hoher Schubkräfte in Fundamentabstützungen in Maschinen und Anlagen wie beispielsweise in Windkraftanlagen. Die Forderung nach immer kleinerer Bauweise erfordert verstärkt Komponenten, die einen hohen Reibungskoeffizienten aufweisen.

Üblicherweise wird für die Berechnung und die Auslegung von Flanschkupplungsverbindungen oder reibungsbehafteten Verbindungs- bzw. Fügeflächen von Maschinen und Anlagen in der Antriebstechnik ein Reibwert zwischen den Kontaktflächen bei der Materialpaarung Stahl / Guss oder Stahl / Stahl von ca. µ = 0,12 bis µ = 0,18 zugrunde gelegt. Besondere Massnahmen der Oberflächenbeschichtung gestatteten es in Ausnahmefällen, eine Steigerung des Reibwerts in der Passfuge von bis maximal µ = 0,3 zu ereichen. Bekannte Maßnahmen, die in der Praxis bekannt sind, sind hierbei eingesetzte beschichtete Folien, Beschichtungen auf stabilen Platten, die in die Fugen eingelegt werden und den Kraftfluss sicherstellen.

Bei der Dimensionierung von Wellenverbindungen oder Drehmomentübertragungssystemen, wie beispielsweise axial verbundene Flanschkupplungen oder radial wirkende Schrumpfverbindungen, müssen heute zur sicheren Übertragung der Käfte und/oder Momente bedingt durch den relativ niedrigen Reibwert konstruktive Überdimensionierungen mit entsprechend großen Wirkdurchmessern vorgenommen werden.

Durch die ständig weiter steigenden Anforderungen an den Leichtbau von Maschinen und Anlagen in der Fahrzeugtechnik, der Energietechnik (z. B. bei Windkraftanlagen) und in vielen anderen Bereichen werden sichere Lösungen zur Kraft- und/oder Momentübertragung gesucht.

Die WO 2010/010237 A1 offenbart eine Maschinenanordnung der eingangs genannten Art. Spezielle Maßnahmen, wie das übertragbare Drehmoment zwischen zwei Maschinenteilen erhöht werden kann, zeigen die DE 197 10 932 A1**,** die EP 2 273 142 A1 und die DE 10 2007 057 906 A1**.**

Der Erfindung liegt die Aufgabe zugrunde, eine Maschinenanordnung der eingangs genannten Art so weiterzubilden, dass es möglich ist, eine verbesserte Paarung zweier im Reibverbund stehenden Elemente zu schaffen, so dass mit einfachen Mitteln eine wesentliche Erhöhung des Haftreibkoeffizienten der Paarung erreicht werden kann. Demgemäß soll die Funktionssicherheit bei der Übertragung von Drehmomenten und/oder Kräften verbessert werden.

Die **Lösung** dieser Aufgabe durch die Erfindung ist verfahrensgemäß dadurch gekennzeichnet, dass zumindest einer der Übertragungsabschnitte durch Hartdrehen mit seiner Endkontur versehen wird, wobei während des Hartdrehvorgangs dem Drehwerkzeug eine Oszillationsbewegung in Richtung normal auf die zu bearbeitende Oberfläche überlagert wird.

Vorzugsweise ist auf beiden der sich kontaktierenden Kontaktflächen eine solche Mikroprofilierung eingebracht. Dies ist aber nicht zwingend. Bei Zwischenplatten ist zumeist nur die beidseitige Bearbeitung der Plattenoberfläche notwendig; die Gegenkörper werden nicht bearbeitet. Beim Fügen drücken sich dann die Spitzen in die Oberfläche der Gegenkörper ein.

Die beiden sich kontaktierenden Kontaktflächen werden dabei bevorzugt mit einer Flächenpressung von mindestens 80 10⁶ N/m² aneinander gepresst. Die beiden sich kontaktierenden Kontaktflächen werden dabei gemäß einer möglichen Ausführungsform der Erfindung mittels Verbindungselementen aneinander gepresst; bei diesen handelt es sich bevorzugt um Schrauben.

Zumindest einer der Übertragungsabschnitte besteht gemäß einer Weiterbildung aus gehärtetem Stahl. Die Oberflächenhärte der Übertragungsabschnitte beträgt in diesem Falle bevorzugt zwischen 60 HRC und 65 HRC, besonders vorzugsweise zwischen 62 HRC und 64 HRC.

Die Übertragungsabschnitte können als Flanschabschnitte einer Flanschkupplung ausgebildet sein. Zumindest ein Übertragungsabschnitt kann aber auch als Zwischenlage oder Zwischenhülse ausgebildet sein, die zwischen den beiden Maschinenteilen wirksam angeordnet ist.

Mit der vorgeschlagenen Ausgestaltung bzw. dem vorgeschlagenen Verfahren wird die Herstellung von gehärteten Zwischenscheiben, Zwischenhülsen oder Platten mit erhöhtem Reibungskoeffizient möglich, was auf die vorgesehene frei programmierbar hergestelle Oberflächentopographie zurückzuführen ist.

Mit der vorgeschlagenen Ausgestaltung und dem korrespondierenden Herstellverfahren für eine entsprechende Paarung wird eine Möglichkeit geschaffen, Komponenten herzustellen, die eine erhebliche Steigerung des Reibwertes im Kraftfluss der kraftübertragenden Teilfuge bzw. im Kontaktspalt der Bauteile zulassen. Mit einem Reibwert von µ = 0,6 und gegebenenfalls auch darüber - abhängig von der Werkstoffkombination der beteiligten Kontaktpartner - können mit der vorgeschlagenen Lösung erheblich keinere Durchmesser von Flanschverbindungen oder Querpressverbindungen im Leistungsfluss bei gleicher Leistungsfähigkeit des Wellenstranges erreicht werden. Hierdurch kann auch das Massenträgheitsmoment bzw. das Gewicht vermindert werden.

Insbesondere die beidseitig aufgebrachte Mikroprofilierung mit scharfer Kontur bzw. ausgeformten Spitzen (möglich durch die programmierbare Oberflächentopographie, hergestellt insbesondere durch Hartdrehen mit überlagerter Oszillationsbewegung) auf einer Zwischenscheibe (mit einer durchschnittlichen Spitzenhöhe von mindestens 30 µm) führt bei ausreichender Flächenpressung (von minestens 80 MPa) auf den Gegenseiten zu einer ausgeprägten Verankerung mittels eines Mikroformschlusses. Damit sind große Schubkräfte innerhalb der Verbindung übertragbar. Eine gezielte richtungsorientierte Herstellung der Spitzen verstärkt die Konturgebung und führt zu einem gerichteten Reibwert.

In den Teilfugen, beispielsweise von Flanschkupplungen oder von Querpressungsverbindungen, sind Aussagen über den zu erwartenden Reibwert in der Passfuge als Funktion der Formgebung der Topographie der Zwischenscheiben oder Platten, der mechnischen Festigkeitsdaten der beteiligten Kontaktpartner und der vorhandenen Flächenpressung in der Fuge nach der Montage möglich.

Der Erfindungsgedanke stellt also auf die Herstellung einer frei programmierbar eingestochenen Textur auf der gehärteten Oberfläche eines Übertragungsabschnitts ab, wobei hierunter insbesondere auch reibungssteigernde Zwischenscheiben, dünnwandiger Hülsen oder Platten zu verstehen sind.

Es erfolgt bevorzugt eine gezielte Bearbeitung der gehärteten Oberfläche des Übertragungsabschnitts, und zwar erzeugt durch eine hochfrequente axiale Oszillationsbewegung des Drehwerkzeugs während des Hartdrehens (Einstechverfahren, ermöglicht eine frei programmierbare Oberflächentopographie). Wie bereits erwähnt, können hiermit Zwischenscheiben, Zwischenhülsen oder Platten hergestellt werden, beispielsweise als Einlegeplatten für biegesteife Flanschkupplungen oder für Kontaktplatten zwischen zwei relativ zu fixierenden Bauteilen.

Damit ist es möglich, gezielt einen reibungserhöhenden Effekt in der Fuge zwischen den Kontatkflächen zu erzielen.

Eine Vielzahl von dabei erzeugten ausgeformten Spitzen verankert sich durch die hohe Eigenhärte (62 HRC bis 64 HRC) der Zwischenscheibe, Zwischenhülse oder Zwischenplatte bei gleichzeitiger ausreichender Flächenpressung (je nach Gegenmaterial mindestens 80 MPa Anpressdruck) in den jeweiligen Kontatkflächen des Gegenköpers.

Durch das beschriebene Verfahren ist es möglich, eine strukturierte Oberfläche beidseitig oder auch nur einseitig auf die Zwischenscheibe, -platte oder -hülse aufzubringen. Unter Berücksichtigung einer statistischen Streuung kann ein Reibwert abschätzt werden.

Bevorzugte, aber nicht ausschließliche Anwendungsgebiete sind biegesteife Flanschkupplungen und Wellen-Naben-Verbindungen aller Art. Beispielhafte Einsatzgebiete sind Windkraftanlagen, Verbindungselemente in Schiffsantrieben, Antriebseinheiten für Walzwerke und Lagersitze (Innenring bzw. Außenring).

Damit ist es möglich, konstruktive Freiräume zu schaffen, da auf kleinerem Raum die Übertragung hoher Drehmoment bzw. Kräfte möglich ist.

In der Zeichnung ist ein Ausführungsbeispiel der Erfindung dargestellt. Es zeigen:
- Fig. 1: schematisch eine Maschinenanordnung mit zwei miteinander verbundenen Maschinenteilen, wobei diese mit einem Kupplungsmittel miteinander verbunden sind,
- Fig. 2: in perspektivischer Darstellung die Kontaktfläche eines Übertragungsabschnittes des Kupplungsmittels, hergestellt nach dem Stand der Technik,
- Fig. 3: in perspektivischer Darstellung die Kontaktfläche des Übertragungsabschnittes des Kupplungsmittels nach einer erfindungsgemäßen Ausführungsform und
- Fig. 4: schematisch in perspektivischer Darstellung die Kontaktfläche nach Fig. 3.

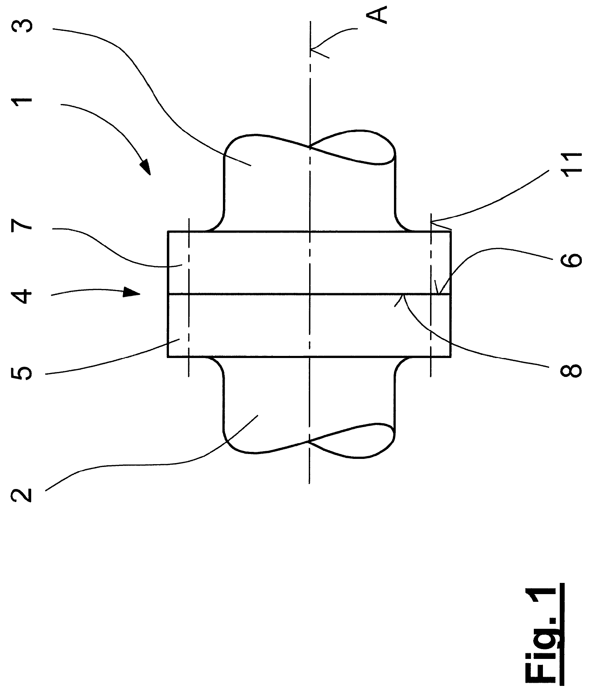

In Fig. 1 ist schematisch eine Maschinenanordnung 1 skizziert. Ein erstes Maschinenteil 2 in Form einer Welle ist mit einem zweiten Maschinenteil 3, ebenfalls in Form der Welle, verbunden. Hierzu sind drehstarre Kupplungsmittel 4 vorgesehen. Die beiden Maschinenteile 2 und 3 rotieren um eine Achse, deren axiale Richtung mit A angegeben ist.

Die Kupplungsmittel 4 haben zwei Übertragungsabschnitte 5 und 7, die als Flanschabschnitte ausgebildet sind, wobei der erste Übertragungsabschnitt 5 mit dem ersten Maschinenteil 2 und der zweite Übertragungsabschnitt 7 mit dem zweiten Maschinenteil 3 fest verbunden, z. B. verschweißt, ist.

Beide Übertragungsabschnitte 5, 7 haben über den Umfang verteilt eine Anzahl an Durchgangsbohrungen, in die Verbindungsmittel 11 in Form von Schrauben eingesteckt sind, so dass die beiden Übertragungsabschnitte 5, 7 fest, aber lösbar miteinander verbunden werden können.

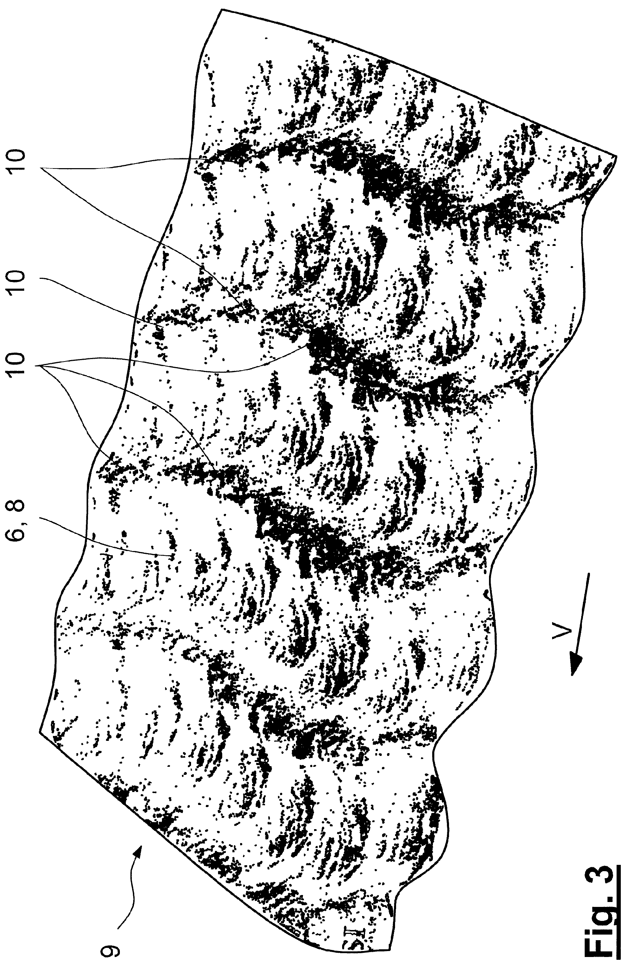

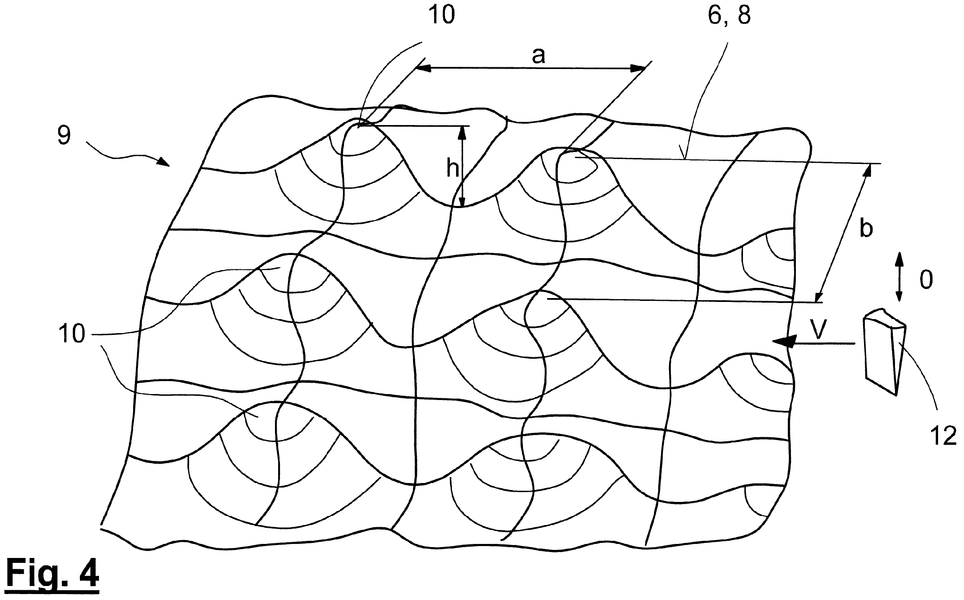

Zur Erhöhung der Festigkeit der Drehübertragung, d. h. um sicherzustellen, dass hohe Drehmomente zwischen den beiden Übertragungsabschnitten 5, 7 übertragen werden können, liegen die beiden Übertragungsabschnitte 5, 7 mit ihren jeweiligen Kontaktflächen - s. Kontaktfläche 6 des ersten Übertragungsabschnitts 5 und Kontaktfläche 8 des zweiten Übertragungsabschnitts 7 - aufeinander, wobei vorgesehen ist, dass auf zumindest einer der Kontaktflächen 6 bzw. 8 - vorzugsweise aber auf beiden Kontaktflächen - eine regelmäßig eingebrachte Mikroprofilierung 9 vorhanden ist, wie sie in Fig. 3 und in Fig. 4 dargestellt ist. Hiernach ist vorgesehen, dass in regelmäßigen Abständen a Materialspitzen 10 vorhanden sind, die sich aus der Basiskontur der Oberfläche herausheben und namentlich Talbereiche um mindestens 30 µm überragen. Die besagte maximale Erhebung der Materialspitzen 10 über den benachbarten Talbereichen ist in Fig. 4 mit der Höhe h markiert.

Die Abstände der Materialspitzen 10 in zwei zueinander senkrechten Richtungen sind mit a und mit b bezeichnet. Die Werte für die Abstände a und b liegen bevorzugt in derselben Größenordnung. Typische und bevorzugte Werte für die Abstände a und b sind zwischen 30 µm und 80 µm

Mithin zeichnet sich die Kontaktfläche 6 bzw. 8 dadurch aus, dass ein weitgehend gleichmäßiges Muster an Erhebungen (Materialspitzen 10) gegeben ist, das sich über die Oberfläche der Kontaktfläche 6, 8 erstreckt. Aufgrund dieses Musters kann beim Zusammenpressen der Übertragungsabschnitte 5, 7 ein Mikroformschluss erreicht werden, der den Reibkoeffizient der zusammenwirkenden Partner groß werden lässt.

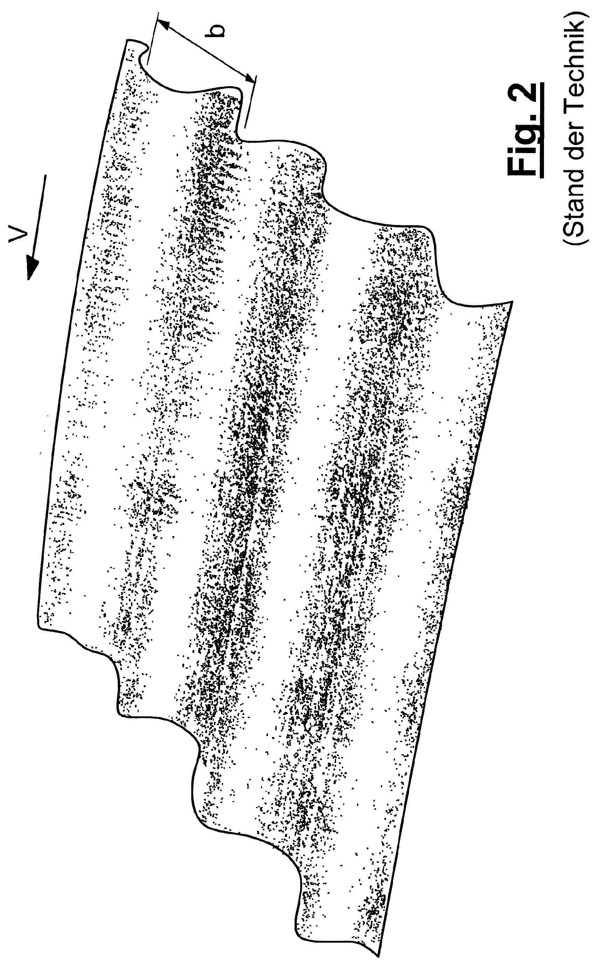

Zur Herstellungsweise der besagten Mikroprofilierung 9 wird auf Fig. 2 und Fig. 4 verwiesen. In Fig. 2 ist zunächst dargestellt, wie nach dem Stand der Technik die Kontaktfläche aussehen würde, wenn - was an sich bekannt ist - eine Hartbearbeitung durch Hartdrehen erfolgt. Dann nämlich ergeben sich durch den Drehprozess nebeneinander liegende Riefen, die parallel zur Vorschubrichtung V verlaufen; die Riefen sind ein Ausschnitt einer letztlich spiralförmigen Kontur, die sich ergibt, wenn bei Drehung des Werkstücks um die axiale Richtung A (s. Fig. 1) das Drehwerkzeug radial verfahren wird.

Gegenüber diesem vorbekannten Verfahren unterscheidet sich das vorgeschlagene Verfahren darin, dass - wie in Fig. 4 angedeutet ist - der Schneide 12 des Drehwerkzeugs beim Vorschub in Vorschubrichtung V eine Oszillationsbewegung in Oszillationsrichtung O überlagert wird, die normal auf der Oberfläche der Kontaktfläche 6, 8 steht.

Es ergibt sich - bei entsprechender Oszillationsfrequenz in Abhängigkeit der Schnittgeschwindigkeit in Vorschubrichtung V - das in Fig. 4 illustrierte regelmäßige Oberflächenmuster mit dem beschriebenen Effekt.

Die Wahl der Parameter - insbesondere der Oszillationsfrequenz bei gegebener Vorschub- bzw. Schnittgeschwindigkeit sowie die Amplitude der Oszillationsbewegung - ermöglicht eine weitgehend freie Wahl des sich ergebenden Musters der Mikroprofilierung.

Das sich so ergebende Bauteil kann als direkt zum Einsatz kommendes Element verwendet werden. Es ist aber auch möglich, dass das Bauteil als Zwischenelement verwendet wird, das zwischen zwei reibschlüssig zu verbindende Bauteilen eingebaut wird.

So kann das Bauteil als Zwischenplatte oder auch Zwischenhülse ausgebildet sein, die zwischen zwei scheibenförmige oder zylindrische bzw. hohlzylindrische Elemente eingebaut wird.

Möglich ist auch die Verwendung als Platte, die zwischen zwei Bauteilen eingelegt und dann verspannt wird, um (Schub)Kräfte verbessert übertragen zu können.

### Bezugszeichenliste

- 1: Maschinenanordnung
- 2: erstes Maschinenteil
- 3: zweites Maschinenteil
- 4: Kupplungsmittel
- 5: erster Übertragungsabschnitt
- 6: erste Kontaktfläche
- 7: zweiter Übertragungsabschnitt
- 8: zweite Kontaktfläche
- 9: Mikroprofilierung
- 10: Materialspitze
- 11: Verbindungselement (Schraube)
- 12: Schneide des Drehwerkzeugs

- a: Abstand
- b: Abstand
- h: Höhe
- V: Vorschubrichtung
- O: Oszillationsrichtung
- A: axiale Richtung

## Patentansprüche

1. Verfahren zur Herstellung einer Maschinenanordnung (1), umfassend ein erstes Maschinenteil (2) und ein zweites Maschinenteil (3), wobei Kupplungsmittel (4) vorhanden sind, um die beiden Maschinenteile (2, 3) fest miteinander so zu verbinden, dass ein Drehmoment und/oder eine Kraft vom ersten auf das zweite Maschinenteil übertragen werden kann, wobei die Kupplungsmittel (4) zumindest einen fest mit dem ersten Maschinenteil (2) verbundenen oder mit diesem in Kontakt stehenden ersten Übertragungsabschnitt (5) mit einer ersten Kontaktfläche (6) und mindestens einen fest mit dem zweiten Maschinenteil (3) verbundenen oder mit diesem in Kontakt stehenden zweiten Übertragungsabschnitt (7) mit einer zweiten Kontaktfläche (8) aufweisen, wobei die beiden Kontaktflächen (6, 8) aufeinander gepresst werden und wobei auf zumindest einer der Kontaktflächen (6, 8) eine zumindest abschnittsweise regelmäßig eingebrachte Mikroprofilierung (9) vorhanden ist, dergestalt, dass in regelmäßigen Abständen (a, b) Materialspitzen (10) vorhanden sind, die benachbarte Talbereiche um mindestens 30 µm übertragen,
**dadurch gekennzeichnet, dass**
zumindest einer der Übertragungsabschnitte (5, 7) durch Hartdrehen mit seiner Endkontur versehen wird, wobei während des Hartdrehvorgangs dem Drehwerkzeug eine Oszillationsbewegung in Richtung normal auf die zu bearbeitende Oberfläche überlagert wird.

2. Verfahren nach Anspruch 1, **dadurch gekennzeichnet, dass** auf beiden der sich kontaktierenden Kontaktflächen (6, 8) eine Mikroprofilierung (9) eingebracht wird.

3. Verfahren nach Anspruch 1 oder 2, **dadurch gekennzeichnet, dass** die beiden sich kontaktierenden Kontaktflächen (6, 8) mit einer Flächenpressung von mindestens 80 10⁶ N/m² aneinander gepresst werden.

4. Verfahren nach einem der Ansprüche 1 bis 3, **dadurch gekennzeichnet, dass** die beiden sich kontaktierenden Kontaktflächen (6, 8) mittels Verbindungselementen (11) aneinander gepresst werden.

5. Verfahren nach Anspruch 4, **dadurch gekennzeichnet, dass** die Verbindungselemente (11) Schrauben sind.

6. Verfahren nach einem der Ansprüche 1 bis 5, **dadurch gekennzeichnet, dass** zumindest ein Übertragungsabschnitt (5, 7) als Zwischenlage oder Zwischenhülse ausgebildet wird, die zwischen den beiden Maschinenteilen (2, 3) wirksam angeordnet ist.

## Claims

1. Method for the production of a machine arrangement (1), comprising a first machine part (2) and a second machine part (3), wherein coupling means (4) are present in order to securely connect the two machine parts (2, 3) to one another such that a torque and/or a force can be transmitted from the first machine part to the second, wherein the coupling means (4) have at least one first transmitting section (5), having a first contact surface (6), which is securely connected to the first machine part (2) or is in contact therewith, and at least one second transmitting section (7), having a second contact surface (8), which is securely connected to the second machine part (3) or is in contact therewith, wherein the two contact surfaces (6, 8) are pressed against one another and wherein on at least one of the contact surfaces (6, 8) there is a micro-profiling (9) which is created in a regular manner at least in certain sections such that at regular intervals (a, b) there are material peaks (10) which stand at least 30 µm above adjacent trough regions,
**characterized in that**
at least one of the transmitting sections (5, 7) is provided with its final contour by hard turning, wherein during the hard turning process an oscillatory motion in a direction normal to the surface which is to be machined is overlaid onto the tool.

2. Method according to Claim 1, **characterized in that** a micro-profiling (9) is applied to both of the mutually contacting contact surfaces (6, 8).

3. Method according to Claim 1 or 2, **characterized in that** the two mutually contacting contact surfaces (6, 8) are pressed together with a pressure of at least 80×10⁶ N/m².

4. Method according to one of Claims 1 to 3, **characterized in that** the two mutually contacting contact surfaces (6, 8) are pressed together by means of connection elements (11).

5. Method according to Claim 4, **characterized in that** the connection elements (11) are screws.

6. Method according to one of Claims 1 to 5, **characterized in that** at least one transmitting section (5, 7) is in the form of an intermediate layer or intermediate sleeve which is arranged actively between the two machine parts (2, 3).

## Revendications

1. Procédé de fabrication d'un ensemble de machine (1), comprenant une première partie de machine (2) et une deuxième partie de machine (3), des moyens d'accouplement (4) étant prévus pour connecter fixement l'une à l'autre les deux parties de machine (2, 3) de telle sorte qu'un couple et/ou une force puissent être transmis de la première à la deuxième partie de machine, les moyens d'accouplement (4) présentant au moins une première portion de transfert (5) connectée fixement à la première partie de machine (2) ou en contact avec celle-ci, avec une première surface de contact (6), et au moins une deuxième portion de transfert (7) connectée fixement à la deuxième partie de machine (3) ou en contact avec celle-ci, avec une deuxième surface de contact (8), les deux surfaces de contact (6, 8) étant pressées l'une contre l'autre et sur au moins l'une des surfaces de contact (6, 8) étant prévu un microprofilage (9) pratiqué au moins en partie de manière régulière de telle sorte que des pointes de matériau (10) soient présentes à intervalles réguliers (a, b), lesquelles dépassent d'au moins 30 µm de régions en creux adjacentes,
**caractérisé en ce**
**qu'**au moins l'une des portions de transfert (5, 7) est pourvue de son contour final par tournage dur, un mouvement d'oscillation dans une direction perpendiculaire à la surface à usiner étant superposé à l'outil de tournage pendant l'opération de tournage dur.

2. Procédé selon la revendication 1, **caractérisé en ce qu'**un microprofilage (9) est réalisé sur les deux surfaces de contact (6, 8) en contact l'une avec l'autre.

3. Procédé selon la revendication 1 ou 2, **caractérisé en ce que** les deux surfaces de contact (6, 8) en contact l'une avec l'autre sont pressées l'une contre l'autre avec une pression de surface d'au moins 80 10⁶ N/m².

4. Procédé selon l'une quelconque des revendications 1 à 3, **caractérisé en ce que** les deux surfaces de contact (6, 8) en contact l'une avec l'autre sont pressées l'une contre l'autre au moyen d'éléments de connexion (11).

5. Procédé selon la revendication 4, **caractérisé en ce que** les éléments de connexion (11) sont des vis.

6. Procédé selon l'une quelconque des revendications 1 à 5, **caractérisé en ce qu'**au moins une portion de transfert (5, 7) est réalisée sous forme de couche intermédiaire ou de douille intermédiaire, qui est disposée de manière active entre les deux parties de machine (2, 3) .
